(19)

Europäisches
Patentamt
European
Patent Office
Office européen
des brevets

(11) **EP 2 770 565 A1**

(12) **EUROPEAN PATENT APPLICATION**

(43) Date of publication:
**27.08.2014 Bulletin 2014/35**

(51) Int Cl.:
***H01M 4/86*** (2006.01)   ***H01M 4/88*** (2006.01)
***H01M 8/02*** (2006.01)

(21) Application number: **13156781.0**

(22) Date of filing: **26.02.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **VITO NV
2400 Mol (BE)**

(72) Inventor: **The designation of the inventor has not
yet been filed**

(74) Representative: **Jansen, Cornelis Marinus et al
V.O.
Johan de Wittlaan 7
2517 JR Den Haag (NL)**

(54) **Method of manufacturing gas diffusion electrodes**

(57) A process for manufacturing a gas diffusion
electrode comprising an electrochemically active layer,
a water-repellent layer and an integrated current collector, said process comprising the steps of: (i) preparing
said electrochemically active layer comprising an electrically conductive powder and a first binder; (ii) preparing
a second layer comprising a pore-forming agent and particles of a hydrophobic material and/or a second binder
on said electrochemically active layer to provide a laminate; (iii) assembling said electrochemically active layer,
said second layer and said current collector such that
said electrochemically active layer is sandwiched between said current collector and said second layer; and
(iv) rendering said second layer water repellent by realising porosity therein, thereby providing said gas diffusion
electrode; a gas diffusion electrode obtainable by said
process; a membrane assembly comprising at least one
of said gas diffusion electrodes; a method of manufac-
turing a membrane assembly comprising said membrane
sandwiched between two electrodes at least one of which
is said gas diffusion electrode, wherein said method comprises: the step of casting said membrane electrode as-
sembly in two steps; the use of said gas diffusion electrode in any cell operating in galvanic or electrolytic mode;
and a process for manufacturing a water repellent layer
of said gas diffusion electrode, said process comprising
the steps of: (a) mixing a pore forming agent with particles
of a hydrophobic material and/or a second binder to form
a second mixture; (b) pressing the second mixture into
a homogeneous cake; and (c) reducing the cake in thickness by at least two passes through a calendaring machine to produce the second layer on the electrochemi-
cally active layer.

(i.a)        (i.b)

(ii.a)        (ii.b)

**FIGURE 3.**

EP 2 770 565 A1

## Description

## Technical field of the invention

The present invention relates to a method of manufacturing gas diffusion electrodes (GDE's), gas-diffusion electrodes obtainable by said method, a membrane electrode assembly (MEA) comprising at least one gas diffusion electrode and the use of said gas-diffusion electrode in any cell operating in galvanic or electrolytic mode.

## Background of the invention

Society is facing a depletion of fossil resources, and especially oil is expected to run out in a few decades. This depletion threatens the productivity of our society as oil is important as an energy source and feedstock for chemicals and fuels. Renewable energy sources like wind, sun and nuclear energy offer an alternative for our electricity supply, but offer no solution for fuels and chemicals. Biomass is currently the only source that can supply our society with a renewable feedstock for chemicals and fuel. Current production and utilization technologies however, compete with food chain provisions, e.g. sugars are the basis for ethanol fermentation. Given the rising demand for food, this competition is unacceptable. Furthermore, as it is expected that food prices will rise, agriculture can only deliver an expensive feedstock for renewable fuels and chemicals. This means that there is a great need of technology that can transfer low-grade biomass, substrate organics contained in wastewaters or even more preferably, $CO_2$ into fuels and chemicals. Although several routes are being explored at the moment (thermo-chemical, pre-treatment lignocelluloses, alternative fermentations), none of them are proven on a large scale or are likely to operate in an economically attractive way. The main problem is the limited energy and carbon efficiency, due to extensive pre-treatment and energy intensive operation. Highly specific conversions and separation operations are crucial, and careful selection of these is needed to reduce energy use of the system.

Electrochemistry is a clean and convenient method for the generation of electricity and numerous chemicals. Electrochemical conversions may be carried out directly, indirectly or through chemical redox mediators, at an electrode. In any case, the reactor is an electrochemical cell which may come in many designs and sizes. They may have cathode and anode compartments separated by membranes or microporous materials such as sintered glass (divided cells), or be single compartment (undivided cells). The electrode materials (except for the catalyst) are usually chosen to be inert at the operational reducing or oxidizing conditions and the potential at the working electrode may be controlled with respect to a reference electrode (potentiostatic mode of operation). Alternatively, the reactions may be run at controlled (usually constant) current (galvanostatic mode of operation). In most cases, for an electrosynthetic conversion the reaction conditions run galvanostatically, see Utley J., Chemical Society Reviews, volume 26 157-167 (1997).

In many electrochemical applications, including electrosynthesis, there is a need to expose an electrolyte to a very large inner electrode area. This could be expressed such that the electrode should exhibit a very high surface to volume ratio. Several types of electrodes, materials and procedures for their fabrication have been previously reported.

CA 1,264,724 discloses a process for the production of a porous structure comprising an organic material dispersed in a binder, comprising the steps of: (a) fixing the organic material to a powdered support, thus forming a powdered support loaded with said organic material; (b) mixing together the thus formed loaded powdered support with a powdered binder in a dry state so as to form a mixture; (c) subjecting the thus formed mixture to an agglomerating treatment so as to form an agglomerate; (d) subjecting the thus formed agglomerate to a grinding treatment so as to form a ground agglomerate, and (e) compressing the ground agglomerate to form a compact, all these steps being effected at a temperature below 340 K.

US 4,362,790 discloses a porous electrode comprising at least a porous catalytic layer containing a catalytically active noble-metal, carbon and a polymeric binder and a porous metallic collector, which is situated on the electrode-side of the porous catalytic layer, wherein the catalytic layer has a thickness of less than 80 $\mu$m and a catalytically active noble-metal content of at most about 250 $\mu$g/cm$^2$, and wherein the noble-metal particles in the layer are situated on the surface and/or in the pores of part of the carbon particles, while the rest of the carbon particles contain no noble-metal particles.

EP 200245A discloses a process for producing a porous structure containing as a minimum an organic material (preferably biologically active or of biological origin e.g. enzymes, microorganisms, organelles and mixtures thereof), dispersed in a binder, characterized by a sequence of operations as follows: the organic material in powder form, and the pulverulent binder in the dry state are mixed together to form a mixture; this mixture is subjected to an agglomeration treatment in order to form agglomerates; the agglomerates thus formed are subjected to a crushing treatment in order to form crushed agglomerates and the crushed agglomerates are compressed together in order to form a tablet, all these operations being performed at a temperature below 340 K.

US 4,383,010 discloses a process for the production of a layer for an electrode for a cell, particularly for a fuel cell, comprising the steps of: (a) mixing an electrically conductive fine-grained powder and a powdery binder in a dry condition; (b) subjecting the conductive fine-grained powder and a powdery binder mixed according to step (a) to agglomeration in a dry condition; (c) breaking the agglomerates formed according to step (b) to obtain particles; (d) pressing the particles obtained according to step (c) to form a mass; and (e) rolling the mass obtained according to step (d) to form a layer.

US 4,680,100 discloses an electrode comprising a plurality of fibers, wherein each of said fibers has a thin, uniform and firmly adherent, electrically conductive metallic coating thereon and also discloses and electro-chemical cell, comprising at least one pair of electrodes wherein the electrodes in each of said pairs are of opposite electrical charges, and wherein at least one of said electrodes in each of said pairs includes a plurality of fibers having ends adjacent to another, a thin, uniform and firmly adherent, electrically conductive metallic coating on each of said fibers at said ends which extends along a length of each of said fibers, a terminal at said metal coated fiber ends, and an electrically conductive metal which extends between and joins said metallic coatings at said fiber ends to one another and to said terminal to provide an integral metal matrix that produces an efficient electrical connection between said metallic coated fibers and said terminal.

US 6,521,381 discloses a method of making an electrode structure comprising the steps of: (a) providing a current collector sheet; (b) forming a mixture comprising proton conductive material and carbon particles; (c) applying the mixture onto the current collector sheet and forming a film from the mixture, the film having first and second surfaces with the first surface adhered to the sheet; and then (d) generating a flux of metal atoms and collecting the atoms on the second surface of the film to form dispersed metallic polycrystals on the second surface of the film, wherein the flux of metal atoms is generated by physical vapor deposition, the physical vapor deposition occurring in a manner which maintains physical characteristics of the metal atoms throughout generation and collection. However, hot press manufacturing techniques are disclosed and there is no mention of phase inversion or the use of coating techniques.

In 2004 M. Cifrain et al. in Journal of Power Sources, volume 127, pages 234-242, reported that Alkaline fuel cells (AFCs), although known to have a high efficiency, were considered to be only useful for space applications due to their high price, their low lifetime and their high carbon dioxide sensitivity and that AFCs can be built low-cost and $CO_2$ reconcilable with sufficient lifetimes for vehicles and backup systems. They reported that key is a liquid circulating electrolyte which avoids many problems that membrane systems have, like the water and the heat management. Furthermore, M. Cifrain et al. reported that a standard AFC-electrode consists of several PTFE-bonded carbon black layers sometimes also containing other hydrophobic materials like paraffin wax or other plastics like polyethylene (PE) or polysulfone (PSU), that other additives are graphite (for increasing the electrical conductivity) and pore-formers (like sugar) and that sometimes porous PTFE foils are pressed onto the gas side, the electrodes being produced by rolling, pressing and sintering procedures.

F. Bidault et al. in 2009 in Journal of Power Sources, volume 187, pages 39-48, reviewed gas diffusion cathodes for alkaline fuel cells and reported that the overall performance and stability is dominated by the behaviour of the cathode, leading to a focus of research effort on cathode development. They further stated that the performance and durability of the gas diffusion electrode is very much dependent upon the way in which the layer structures are fabricated from carbon and polytetrafluoroethylene (PTFE) and that the choice and treatment of the carbon support is of primary importance for the final catalytic activity. They reported that, in general, AFC electrodes consist of several PTFE-bonded carbon black layers, which fulfill different functions, that modern electrodes tend to use high surface area carbon supported catalysts and PTFE to obtain the necessary three phase boundary (TPB) and that pressing, rolling, screen-printing and spraying methods are used in the production of AFC electrodes.

V. Neburchilov et al. in 2010 in Journal of Power Sources, volume 195, pages 1271-1291, reviewed the compositions, designs and methods of fabrication of air cathodes for alkali zinc-air fuel cells and reported that the more promising compositions for air electrodes are based on individual oxides, or mixtures of such, with the spinel, perovskite, or pyrochlore structure: $MnO_2$, Ag, $Co_3O_4$, $La_2O_3$, $LaNiO_3$, $NiCo_2O_4$, $LaMnO_3$, $LaNiO_3$ etc., which provide the optimum balance of Oxygen Reduction Reaction (ORR) activity and chemical stability in an alkali electrolyte. They further reported that sol-gel and reverse micelle methods supply the most uniform distribution of the catalyst on the carbon and the highest catalyst BET surface area and that the design of the air cathode, including types of carbon black, binding agents, current collectors, Teflon membranes, thermal treatment of the gas diffusion layer, and catalyst layers, has a strong effect on performance.

WO2005/096419 A1 describes an electrode for alkaline fuel cells with increased service life. The electrode comprised an insulating frame having ports for feeding and discharging reagents, a mesh current collector embedded in the frame and having lead-outs extending beyond the frame, an active and a barrier layers sequentially applied onto the mesh current collector, wherein sites of the embedment of the current collector and the lead-outs in the insulating frame and a periphery of the current collector long an inner edge of the insulating frame are provided with a sealing layer which can be made of an electrolyte non-wettable substance. The method for producing the electrode for alkaline fuel cell also included producing a mesh current collector having lead-outs, sequentially applying an active and a barrier layers onto the mesh current collector, embedding the current collector having the lead-outs into the insulating frame, wherein, before the application of the active and barrier layers onto the current collector, edges of the current collector and the lead-outs in sites of the embedment in to the insulating frame are impregnated with a lacquer solution and, after the collector has been embedded into the insulating frame, a periphery of the collector along an inner edge of the insulating frame is impregnated with the lacquer solution. A solvent wetting the mesh current collector was used as a solvent for the lacquer, and a substance which forms a continuous non-wettable film after the evaporation was used as the lacquer.

The above-described electrodes have been mainly used in the field of chemical fuel cells with the object of obtaining electricity as the sole or main product.

Electrochemical conversions have also been reported to occur in Bioelectrochemical Systems (BES). The use of air cathodes in bioelectrochemical systems was first reported in 2006 (Cheng et al. in 2006 in Electrochemistry Communications, Vol. 8, pages 489-494). In Microbial Fuel Cell (MFC) configuration, the BES produces electricity and the cathode reaction is usually reduction of oxygen as reported in 2006 by Logan et al. in Microbial Fuel Cells: Methodology and Technology. Environmental Science & Technology, volume 40, pages 5181-5192. Reactors and methods for power generation using MFCs have been previously described.

JP 2000-133327A discloses a power generating method and device using micro-organism as both electron donor and electron acceptor, in a structure where a negative electrode and a positive electrode are electrically connected and an electron from the electron donor in negative electrode solution is supplied to the electron acceptor in positive electrode solution to provide electrical current. Electrons are taken out via an electron mediator (such as thionine) from micro-organism of an electron donor such as facultative anaerobic bacteria, strict anaerobic bacteria, or indigo-algae, which is contained in pH buffer solution of negative electrode solution reach a positive electrode through a negative electrode such as gold, a negative terminal, an external resistance, and a positive terminal. Electrons are supplied to the micro-organism of an electron acceptor such as facultative anaerobic bacteria, strict anaerobic bacteria, or microaerophilic bacteria through an electron mediator such as iron ions contained in positive electrode solution separated from the negative electrode solution via a cation exchange film. In this time, together with environment friendly carbon dioxide fixing, the micro-organism consumes oxidation energy to form a closed circuit, and therefore, good power generation is performed. As the positive and negative electrode solutions, drainage containing organic matter can be used. The bacteria contemplated in JP 2000-133327A that function as the electron donor are either a facultative anaerobic bacterium, a strictly anaerobic bacterium or cyanobacterium, more particularly *Escherichia coli*, and *Synechoccus sp.*, respectively; the bacterium that functions as electron acceptor is a facultative anaerobic bacterium, a strictly anaerobic bacterium, or microaerophilic bacterium, more particularly *Thiobacillus ferrooxidans.* The electron mediators contemplated at the negative electrode solution are at least one sort of thionine and 2-hydroxy-1,4-naphthoquinone, and at the positive electron solution consists of iron ions. The anode and cathode consist of -independently - at least one sort of gold, platinum, and carbon, respectively.

WO 2007/073598A1 discloses a fuel cell bioreactor for producing electrical power, comprising; a) a vessel containing metal-oxidizing microorganisms and a catholyte containing a redox couple with a first member of the redox couple in a higher oxidation state than a second member of the redox couple; b) a cathode electrode immersed in the catholyte; c) an anode electrode assembly including a membrane anode assembly which includes a proton conducting membrane attached to an anode electrode, the anode electrode assembly including a current collector physically contacting the anode electrode, the current collector and the anode electrode being configured to form an anode compartment therebetween, the anode electrode assembly including an insulating housing into which the current collector and the anode electrode are inserted to seal the anode electrode and the current collector from the catholyte such that the anode electrode assembly is configured so that the anode compartment is separated from said catholyte by the proton conducting membrane; d) a first fluid feed mechanism for feeding a fluid containing oxygen ($O_2$) and carbon dioxide into the catholyte; e) a second fluid feed mechanism for feeding a fuel containing a hydrogen constituent into said anode compartment, wherein a reaction at the cathode electrode is reduction of the first member of the redox couple in a higher oxidation state to the second member of the redox couple in a lower oxidation state, and wherein a reaction at the anode electrode is electrochemical oxidation of the fuel to produce electrons (e ) and protons ($H^+$), wherein protons ($H^+$) cross the proton conducting membrane from the anode compartment into the catholyte, and wherein the second member of the redox couple in the lower oxidation state is oxidized back to the first member of the redox couple in the higher oxidation state by metal-oxidizing microorganisms in an aerobic oxidation reaction in the presence of oxygen, wherein electrical power is obtained by making electrical connection between a load and the anode and cathode electrodes; and f) liquid circulation mechanism configured to circulate the catholyte such that the second member of the redox couple in the lower oxidation state produced at the cathode and protons ($H^+$) are transported away from the cathode electrode. The fuel cell bioreactor disclosed in WO 2007/073598A1 only describes the use of iron-oxidising bacteria on the cathode and is based on the microbial regeneration of the oxidant ferric ions and on the cathodic reduction of ferric to ferrous ions, coupled with the microbial regeneration of ferric ions by the oxidation of ferrous ions, with the fuel (such as hydrogen) oxidation on the anode. The microbial regeneration of ferric ions is achieved by iron-oxidizing microorganisms such as *Leptospirillum.* Electrical generation is coupled with the consumption of carbon dioxide from atmosphere and its transformation into microbial cells, which can be used as a single-cell protein. No possibilities for direct transfer to the electrode are disclosed and the gases are not provided via a gas-diffusion electrode.

FR 2843490A1 discloses a procedure for treating at least one of the electrode (anode or cathode) of a fuel cell, before its operation. Such procedure consists of developing a biofilm over at least one part of the so said electrode by its immersion in a suitable medium for biofilm development, under an imposed electrode polarization potential. The biofilm is destined to catalyze a reaction over the electrode. This invention targets the application of these biofilm electrodes in microbial fuel cells.

FR 2936105A1 discloses improved microbial fuel cells composed of two selective electrodes of different materials, in contact with a unique electrolytic media containing a microorganisms capable of developing a biofilm over the respective surfaces of the so said electrodes, which are externally connected by a resistance. The first electrode is considered to be made of graphite, while the second one is considered to be made of stainless steel. The external resistance is considered to be in between 33 and 1000 ohms. The electrolytic media is composed of marine, river or lake sediments, urban or industrial wastewaters, humid soils or composts. The electrolytic media is inoculated with microbial cultures capable of developing electrochemically-active (EA) biofilms. Each electrode, see cathode and anode, are set at an imposed potential, which is controlled in between -0.5 V to 0 V against a saturated calomel electrode (SCE) for the cathode, and in between 0 V and 0.5 V for the anode, more preferably in between -0.2 V and 0 V for each electrode. FR 2936105A fails to disclose the use and manufacture of gas-diffusion electrodes.

US 2009/0305084A discloses a membraneless and barrier-less microbial fuel cell comprising a cathode module, an anode module, a means for feeding source water from the anode module to the cathode module and a method of reducing biological oxygen demand in water using this microbial fuel cell, wherein said source water is introduced into said anode module and discharged from said cathode module and wherein air is introduced to the source water after said anode module. This invention is based is on the technology of using a microbial fuel cell that converts chemical energy into electrical energy through the metabolism of microorganisms, in which the chemical energy is in the form of organic substances present in wastewater. US 2009/0305084A fails to disclose the use and manufacture of gas-diffusion electrodes.

WO 2010/044983A2 discloses a method for preparing a microbial fuel cell, wherein the method includes: (i) inoculating an anodic liquid medium in contact with an anode of the microbial fuel cell with one or more types of microorganisms capable of functioning by an exoelectrogenic mechanism; (ii) establishing a biofilm of the microorganisms on and/or within the anode along with a substantial absence of planktonic forms of the microorganism by substantial removal of the planktonic microorganisms during forced flow and recirculation conditions of the anodic liquid medium; and (iii) subjecting the microorganisms of the biofilm to a growth stage by incorporating one or more carbon containing nutritive compounds in the anodic liquid medium during biofilm on the anode has been established. WO 2010/044983A2 fails to disclose the use of gas-diffusion electrodes.

In Microbial Electrolysis Cell (MEC) configuration, on the other hand, the reaction at the cathode needs input of electrical energy to run, and added-value products like hydrogen or hydrogen peroxide can be produced as reported in 2006 by Rozendal et al. in International Journal of Hydrogen Energy, volume 31, pages 1632-1640. Part of the electrical energy to drive such processes comes from the microbial electrolysis of organic matter at the anode, although an external power supply is necessary to achieve attractive production rates. Rozendal et al. in 2009 described a process for hydrogen peroxide generation from organic matter bioelectrolysis using MEC (see Rozendal R.A., Leone E., Keller J., Rabaey K., Efficient hydrogen peroxide generation from organic matter in a bioelectrochemical system in Electrochemistry Communications, volume 11, pages 1752-1755). D. Pant in 2011 in Renewable and Sustainable Energy Reviews, volume 15, pages 1305-1313 reported the use of bioelectrochemical systems for sustainable energy and product generation. None of these publications discloses how the gas-diffusion electrodes are manufactured, although this is crucial for the realization of adequate industrial performance.

WO 2005-005981A2 discloses a process for producing hydrogen from bio-oxidisable material by: introducing the bio-oxidisable material into a reactor provided with an anode and a cathode and containing anodophilic bacteria in an aqueous medium; applying a potential between the anode and cathode of between 0.05 and 1.5 volt; collecting hydrogen gas from the cathode. The bacteria for the anode (anodophilic bacteria) according to the teaching of WO 2005/005981A2 are derived from activated and/or anaerobic sludge; they may or may not be in contact with a mediator and carbon dioxide is collected at the anode.

WO 2010/072982A1 discloses an electrolytic device comprising a cathode immersed in an electrolyte solution comprising at least a weak acid and having a pH between 4 and 9; an anode immersed in an electrolyte solution capable of forming an electrochemically active biofilm on the anode surface, and comprising at least one biodegradable organic compound capable of being biodegradable and oxidized at the anode, the cathode, wherein the cathode is or comprises a material selected from conductive polymers is an oxidized form, oxidized or non-oxidized forms of Fe, Cr, Ni or Mo, and their various alloys, particularly stainless steel and in particular the steels 304L, 316L, 254 SMO.

US 2011/0318610A1 discloses a process for producing hydrogen peroxide comprising the steps of

providing a bioelectrochemical system having an, anode and a cathode, feeding a feed solution containing organic or inorganic (or both) material to the anode, oxidising, the organic or inorganic material at the anode, providing an aqueous stream to the cathode of the bioelectrochemical system, reducing oxygen to hydrogen peroxide at the cathode, and recovering a hydrogen peroxide containing stream from the cathode.

WO 2010/0042986A1 discloses a process for producing hydrogen peroxide comprising the steps of providing a bioelectrochemical system having an anode and a cathode, feeding a feed solution containing organic or inorganic (or both) material to the anode, oxidising the organic or inorganic material at the anode, providing an aqueous stream to the cathode of the bioelectrochemical system, reducing oxygen to hydrogen peroxide at the cathode, and recovering a hydrogen peroxide containing stream from the cathode. WO 2010/042986A1 further discloses that in another embodiment of the invention a gas diffusion electrode is used as the cathode (e.g., Foller and Bombard, J. Appl. Electrochem. 1995, 25, 613-627; Yamanaka, Angew. Chem. Int. Ed. 2003, 42, 3653-3655). This gas-diffusion electrode is directly exposed to air or oxygen, which guarantees sufficient availability of oxygen and benefits hydrogen peroxide formation. The cathode chamber is in between the ion permeable membrane and the gas diffusion electrode. Gas-diffusion electrodes are known to the person skilled in the art and include electrodes made of carbon powder (e.g. vapor-grown carbon-fiber (VGCF), Showa-Denko Co.) mixed with poly(tetrafluoroethylene) powder (PTFE) (e.g. as described in Foller and Bombard, J. Appl. Electrochem. 1995, 25, 613-627; Yamanaka, Angew. Chem. Int. Ed. 2003, 42, 3653-3655). Furthermore, a gas diffusion cathode was used in the invention example.

Bioelectrochemical systems (BESs) offer other unique possibilities. In 2010, the concept of microbial electrosynthesis (MES) emerged as an alternative option to provide reducing or oxidizing power for biochemical production via electricity (see Rabaey K., Girguis P., Nielsen L.K., in Current Opinion in Biotechnology, (2011) volume 22, pages 1-7; Nevin K.P. et al. in mBio (2010) volume 1(2), pages 1-4; Rabaey K., Rozendal R.A., in Nature Reviews Microbiology (2010) volume 8, pages 706-716). According to Rabaey et al. (2011) MES involves the use of microbial cells as catalysts for synthesis reactions in electrochemical cells, by either supplying electrical current or extracting it from microorganisms. In this way - remarkably, but not exclusively - BESs offer unique possibilities for clean and efficient production of chemicals from low-value waste (waters) or even $CO_2$.

A MES cell comprises an anode and a cathode, typically separated by an ion exchange membrane in which the redox reactions on one or both electrode(s) are catalyzed by an electrochemically active (EA)-microorganisms. At the anode, electrons and sometimes other oxidised products such as $CO_2$ are produced by oxidation reactions. EA-microbes may oxidise organic or inorganic substrates using the electrode material as final electron acceptor, see K. Rabaey et al, Nat. Rev. Micro, volume 8(10), pages 706-716 (2010). Electrons flow through an external electrical circuit to the cathode, while positive charge migrates through the ion exchange membrane that separates both compartments. At the cathode, several reactions can take place in the presence of a suitable electochemically active (bio)catalyst, oxidised species are reduced to value-added products, see Bioresour. Technol, volume 101, pages 3085-3090 (2010). Despite the critical importance of gas-diffusion electrodes for the operation of these systems, methods for manufacturing thereof have not been disclosed.

Microbial biocathodes have already been demonstrated for oxygen reduction (e.g., Rabaey et al., ISME J. 2008, 2, 1387-1396), nitrate reduction (e.g., Clauwaert et al., Environ. Sci. Technol., 2007, 41, 7564-7569), dechlorination (e.g., Aulenta et al., Environ. Sci. Technol., 2007, 41, 2554-2559), hydrogen production (e.g., Rozendal et al., Environ. Sci. Technol., 2008, 42, 629-634), and methane production (e.g., Clauwaert et al., Water Sci. Technol., 2008, 57, 575-579).

WO 2010/068994A1 discloses a process for producing one or more chemical compounds comprising the steps of providing a bioelectrochemical system having an anode and a cathode separated by a membrane, the anode and the cathode being electrically connected to each other, causing oxidation to occur at the anode and causing reduction to occur at the cathode to thereby produce reducing equivalents at the cathode, providing the reducing equivalents to a culture of microorganisms, and providing carbon dioxide to the culture of microorganisms, whereby the microorganisms produce the one or more chemical compounds, and recovering the one or chemical compounds.

WO 2010/068979A1 discloses a process for producing methanol or a methanol derivative from methane comprising the steps of: providing a bioelectrochemical system having a bioanode and a cathode; causing oxidation at the bioanode, providing an aqueous medium to the cathode to produce a reactive oxygen species at the cathode; and reacting the reactive oxygen species with methane to form methanol or a methanol derivative.

Electrode design is the greatest challenge in making MFCs and BES a cost-effective and scalable technology (Rabaey et al. in 2009 in Bioelectrochemical Systems: From Extracellular Electron Transfer to Biotechnological Application, 1st ed. IWA Publishing, London; Sleutels et al. in 2012 in Bioelectrochemical systems: an outlook for practical applications. Chem. Sus. Chem. DOI: 10.1002/cssc.201100732).

The electrode materials in MFC have some general characters and also its self-characteristic. For all the types of electrodes, their base materials must generally be of good conduction, good chemical stability, high mechanical strength, and low cost. Carbon materials and non-corrosive metals, which can basically meet the general requirements above, are currently the most-widely used base materials (Wei et al. in 2011 in Bioresource Technology, Vol. 102, pages 9335-9344). The electrode material for air-cathodes with a catalyst is composed of a base material, a catalyst, a binder, and a waterproof coating. Material characteristics and functions are specific for each part. The base material generally only serves as supporting material and current collector. High conductivity and mechanical strength are critical for it. But there is no special requirement for bacteria adhesion. A catalyst is important for air-cathodes, but not absolutely necessary. If necessary, the catalyst is immobilized on the substrate surface with a binder, and a hydrophobic coating is regularly added onto the cathode to avoid water loss. To reduce the cost of air-cathodes, several highly specific materials, such as activated carbon, that do not require a catalyst have been developed and reported (Deng et al. in 2010 in Appl. Microbiol. Biotechnol., Vol. 87, pages 1675-1687; Zhang et al. in 2009 in Electrochem. Commun., Vol. 11, pages 2177-2179).

US 7,000,297, B2 relates to a current collector for an electrochemical cell. The current collector is a substrate having a grid pattern comprising open areas converging at an imaginary focal point on a connector tab of the substrate. The openings are grouped into distinct regions with the larger openings immediately adjacent to the connector tab and the smaller openings distant from them. This provided more conductive pathways at greater distances from the tab.

Efficiency in electrochemical and bioelectrochemical processes such as fuel cells, electrolysis, electro-organic synthesis, waste recovery, microbial fuel cells, microbial electrolysis cells and other types of microbial electrochemical systems depend substantially upon the surface area of the electrode. Electrodes have been constructed with ridges or convolutions to increase the surface area. Numerous approaches have been implemented for the surface treatment of the electrodes such as sandblasting and ammonia treatment. Little attention has been paid to the role of current collector and the current distribution in the electrode.

Widespread use of fuel cells be it classical fuel cells or microbial electrochemical cells is inhibited by the high cost of gas diffusion electrodes with the necessary balance of properties to function efficiently long term in fuel cells, e.g. in alkaline fuel cells, size limitation due to the production techniques used and the inability of conventional manufacturing techniques to be adapted for use in continuous production lines. Besides, the necessary stability of these electrodes in near neutral pH in bioelectrochemical systems remains a challenge.

There is therefore a need to develop a radically different approach to the manufacture of gas diffusion electrodes for different electrochemical and bioelectrochemical applications while retaining the balance of properties necessary for the efficient long term functioning in fuel cells.

Some prior art gas diffusion electrodes are produced using rolling techniques to provide the required mixture of hydrophobic and hydrophilic pores in an electrically conductive matrix as a result of the dispersion of electrically conductive components such as carbon, graphite and metal particles in the presence of a catalyst necessary to function efficiently long term in fuel cells. In prior art multilayer electrodes poly(tetrafluoroethylene) [PTFE] or perfluorinated ethylene-propylene copolymers [FEP] is used both as a hydrophobic component to provide hydrophobic channels for gas transport and as a binder. Although PTFE is insoluble, it has the ability to creep as a result of a transition temperature near room temperature and hence to be moulded together under cold rolling conditions and hence to bind the multilayer gas diffusion electrodes together. Therefore, the PTFE is present as a cold-sintered continuous structure. The electrical resistivity of carbon materials is relatively high which can produce high electrode ohmic losses in large-scale systems. For example the electrical resistivity of graphite is 1375 $\mu\Omega$ cm, compared to only 42 $\mu\Omega$ cm for titanium (Rozendal et al. in 2008 in Trends Biotechnol., Vol. 26, pages 450-459). To avoid having large resistances, metal current collectors are often used with carbon materials to reduce the overall resistance of the cathode.

Previously recognizing the fact that a current collector will be necessary for making larger electrodes, Zhang et al. in 2010 in Environmental Science & Technology, Vol. 44, pages 1490-1495, built the cathode around the current collector rather than mating a current collector to a preformed cathode structure. They examined the use of porous stainless steel mesh combined with a diffusion layer (DL) coating to prevent water leakage and control oxygen intrusion through the cathode, and a platinum (Pt) catalyst layer for oxygen reduction. A base layer of poly(dimethylsiloxane) (PDMS) and carbon black was applied to the air-side of a stainless steel mesh, and Pt on carbon black with Nafion binder was applied to the solution side as catalyst for oxygen reduction. The PDMS prevented water leakage and functioned as a DL by limiting oxygen transfer through the cathode and improving coulombic efficiency. However, the use of Nafion and Pt together with the simple stainless steel makes this kind of electrode still an expensive preposition.

The use of Pt in air-cathodes and aqueous air-cathodes significantly increased the cathode cost. The price of cathode materials can account for the greatest percentage (47%) of capital costs of air-cathode MFCs (Rozendal et al. in 2008 in Trends Biotechnol., Vol. 26, pages 450-459). Current collectors will be essential to the performance of larger-scale MFCs, and therefore the integral construction of the cathode around the mesh has substantial advances in simplicity of design. Metal current collectors are usually needed for fuel cell electrodes especially for large-scale systems to avoid large in-plane resistances across the electrode area, and therefore MFC electrodes are being constructed around inexpensive current collectors (Zhang et al. in 2011 in Journal of Power Sources, Vol. 196, pages 1097-1102).

The design of the current collector is perhaps the most significant issue for electrochemical cell design, since this highly electrically conductive material (e.g. stainless steel) directly affects the system performance. In addition, current collectors are the most expensive components of an electrochemical cell in terms of material and fabrication costs, in the case of non-precious metal-based electrodes. This is why, it is essential to find a cost-efficient and performance-effective current collector design. The current collector design described here for use in electrodes is a completely novel concept to enhance the efficiency of these electrodes as well as reducing their costs. The current collectors as describe here can be made by various approaches. For example Leno weaving of bound metal elements as described in EP 1,690,966 A1 could be one such approach. This may be a woven fabric comprising metal elements such as steel cords, which woven fabric have warp elements and weft elements being bound to each other by means of a leno weave.

**Summary of the invention**

A first object of the present invention is an improved process for the manufacture of gas diffusion electrodes for membrane assemblies and cells operating in galvanic or electrolytic mode.

An advantage of the present invention is the improved current distribution within the electrode using the novel current collector design when used in an electrochemical and/or bioelectrochemical cell.

Another advantage is reduction in the cost of gas diffusion electrodes due to reduced metal content in the current collector.

Another advantage is the possibility of using an insulator such as plastic within the structure of the current collector leading to improved strength, operational life and reduced cost.

Another advantage of the present invention is that gas diffusion electrodes for use in a liquid electrolyte are no longer limited by the limitations of prior art technology.

Another advantage of the present invention is a considerable reduction in the production complexity of gas diffusion electrodes and hence reduced manufacturing costs.

Another advantage of the present invention is the use of cold rolling which lends itself to production at ambient temperatures.

Another advantage of the present invention is the possibility of disposing of gas diffusion electrodes in an environmentally responsible manner by dissolution with organic solvent without the production of the highly corrosive and toxic hydrogen fluoride which is produced by incineration of prior art electrodes.

Another advantage of the present invention is the possibility of casting a membrane on these cold rolled electrodes to realize membrane electrode assemblies.

Another advantage of the present invention is the possibility of integrating a biological material such as bacteria, fungi, enzyme etc. within the structure of the electrode during manufacture without denaturation or thermolability of the biological material.

The improved gas-diffusion electrodes of the present invention was surprisingly realised by a radically different approach to the manufacture of gas diffusion electrodes for electrochemical cells using computational/numerical modelling (such as the COMSOL Multiphysics approach) in the design and improvement of electrodes, while retaining the balance of properties necessary for the efficient long term functioning in electrochemical cells. This has resulted in changes in the configuration of the current collector over prior art current collectors and represents a breakthrough in all membrane electrode systems due to improvements in the performance of the porous gas diffusion electrode and the current collection capacity thereof.

According to a first aspect of the present invention a process for manufacturing a gas diffusion electrode comprising an electrochemically active layer (AL), a water-repellent layer (WLR) and an integrated current collector, said process comprising the steps of: (i) preparing said electrochemically active layer comprising an electrically conductive powder and a first binder; (ii) preparing a second layer comprising a pore-forming agent and particles of a hydrophobic material; (iii) assembling said electrochemically active layer, said second layer and said current collector such that said electrochemically active layer is sandwiched between said current collector and said second layer e.g. to realise a final laminate thickness of less than 1000 $\mu$m, with less that 800 $\mu$m being preferred and less than 600 $\mu$m being particularly preferred; and (iv) rendering said second layer water repellent by realising porosity therein, thereby providing the gas diffusion electrode.

According to a second aspect of the present invention a gas diffusion electrode is realised obtainable by the first aspect of the present invention.

According to a third aspect of the present invention a membrane assembly is realised, the membrane assembly comprising at least one gas diffusion electrode according to the second aspect of the present invention.

According to a fourth aspect of the present invention a method of manufacturing a membrane electrode assembly comprising a membrane sandwiched between two electrodes (or embedded in an electrolyte located at one end of the electrode) at least one of which is a gas diffusion electrode is realised, wherein said method comprises the step of casting said membrane electrode assembly in two steps, said method preferably comprising at least one phase inversion step.

According to a fifth aspect of the present invention the use of the second aspect of the present invention is realised in any cell operating in galvanic or electrolytic mode e.g. a classical chemical fuel cell or electrolysis cell such as electrolysers, devices for electrochemical metal recovery etc. and bio-electrochemical systems (BES) i.e. microbial fuel cells (MFC), microbial electrolysis cells (MEC), plant microbial fuel cells (P-MFC), microbial desalination cells (MDC), microbial hydrometallurgical cells (MHMC) for metal removal and recovery and microbial electrosynthesis cells (MESC).

According to a sixth aspect of the present invention a process for manufacturing a water repellent layer of a gas diffusion electrode is realised, the process comprising the steps of : (a) mixing a pore forming agent (e.g. ammonium bicarbonate) with a suspension of particles of a hydrophobic material (e.g. PTFE); (b) pressing the second mixture into a homogeneous cake; and (c) reducing the cake in thickness by at least two passes through a calendaring machine to produce the second layer (e.g. with a thickness of less than 1000 $\mu$m thick, preferably less than 800 $\mu$m and particularly preferably less than 600 $\mu$m thick) on the electrochemically active layer.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

Fig.1 represents the current collector comprising two metal meshes sintered together.
Fig.2 represents the current collector comprising a mixed metal and plastic mesh.
Fig 3 represents electrodes with different geometric arrays of current collectors (in i.a and ii.a respectively) together with the calculated current density distributions to be expected with these geometric arrays of current collectors (in i.b and ii.b respectively).
Fig 4 represents a membrane assembly comprising a gas diffusion electrode and a counter electrode with an influent being circulated through and processed therein.

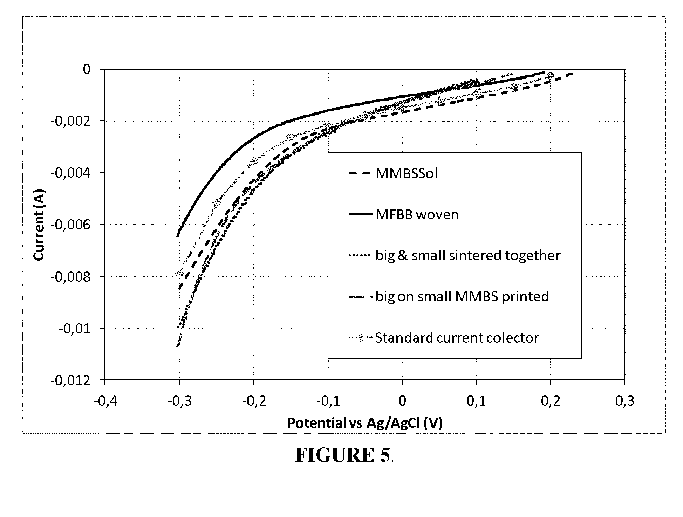

Fig.5 represents polarisation characteristics for the oxygen reduction reaction in a half cell for various cathode configurations with as current collectors: MMBSSol-mixed metal meshes (with two meshes soldered together); MFBB woven; large and small meshes sintered together; large on small MMBS printed. Results obtained for a cathode with analogue layer compositions and standard collector design are provided, for the sake of comparison. In all cases the WRL is manufactured from a mixture containing 70 wt% PTFE/ 30 wt% Ammonium Bicarbonate and an electrolyte of Phosphate buffer solution (PBS) and 10 mM acetate, with air flow on the gas diffusion (WRL) side at a pressure of 5 mbar g is used. Electrode surface area utilized was 10 cm$^2$ for all electrode configurations.

In the different figures, the same reference signs refer to the same or analogous elements.

**Description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "coupled", also used in the claims, should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

Definitions

The term "Water Repellent Layer" (WRL), as used in disclosing the present invention, is a layer having an external surface in contact with gas with porosity to the gas and the capability of preventing leakage of an aqueous electrolyte to the external surface of the gas diffusion layer.

The term "Electrochemically Active Layer" (AL), as used in disclosing the present invention, is a layer in which the electrochemical reaction takes place having high electrical conductivity and porosity to gas and electrolyte and having an interface with electrolyte on one surface and a water repellant (hydrophobic gas diffusion) layer (WRL) on the other.

The term "gas diffusion electrode" (GDE), as used in disclosing the present invention, is an electrode with a conjunction of a solid, liquid and gaseous interface, and an electrical conducting catalyst supporting an electrochemical reaction between the liquid and the gaseous phase. An important prerequisite for the operation of gas diffusion electrodes is that both the liquid and the gaseous phase coexist in the pore system of the electrodes which can be demonstrated with the Young-Laplace equation:

$$p = \frac{2\,\sigma\cos\theta}{r}$$

The gas pressure $p$ is in relation with the liquid in the pore system over the pore radius r, the surface tension $\sigma$ of the liquid and the contact angle $\theta$. This equation is to be taken as a guide for determination because there are too many unknown, or difficult to achieve, parameters. When the surface tension is considered, the difference in surface tension of the solid and the liquid have to be taken into account. But the surface tension of catalysts such as platinum on carbon or silver is hardly measurable. The contact angle on a flat surface can be determined with a microscope. A single pore, however, cannot be examined so it is necessary to determine the pore system of an entire electrode. Thus in order to create an electrode area for liquid and gas, the path can be chosen to create different pore radius r, or to create different wetting angles $\theta$. It typically comprises a current collector (porous electrically conductive web), an electrochemically active layer (AL) in which the electrochemical reaction takes place having high electrical conductivity and porosity to gas and electrolyte and having an interface with electrolyte on one surface and a water repellant (hydrophobic gas diffusion) layer (WRL) on the other.

The term "current collector", as used in disclosing the present invention, means an electrically conducting material in the form of wires providing electronic conductivity to the electrode and increasing the electron recovery.

The term "membrane electrode assembly", as used in disclosing the present invention, means a membrane sandwiched between two electrodes and embraces fuel cells, batteries and hybrid configurations thereof.

The term binder, as used in disclosing the present invention, means a resinous or polymeric material which endows the layer in which it is present with mechanical strength i.e. literally binds the layer and excludes a polymer which is simply suspended as particles in the layer.

The term "battery", as used in disclosing the present invention, means an electrochemical device, which allows a reaction to occur at an anode and a cathode, the fuel being contained internally by the battery housing or being air from the atmosphere. Battery as thus defined also embraces metal-air cells in which metals are oxidised to their ions in solution at the anode and air from the atmosphere is reduced to form hydroxyl ions.

The term "fuel cell", as used in disclosing the present invention, means an electrochemical cell that converts a source fuel supplied outside the fuel cell housing into an electrical current. It generates electricity inside a cell through an oxidation reaction at the anode and a reduction reaction at the cathode, the oxidation releasing electrons which travel to the cathode via the external circuit doing electrical work. The circuit is completed by the movement of a compensating charge through the electrolyte e.g. in the form of positive ions. Fuel cells are made up of three segments which are sandwiched together: the anode, the electrolyte and the cathode.

The term "biological fuel cell (biofuel cell)", as used in disclosing the present invention, means a device capable of directly transforming chemical to electrical energy via electrochemical reactions involving biochemical pathways. Biofuel cells use biocatalysts, which include enzymes and non-enzyme proteins e.g. microbes.

The term "electrolysis cell', as used in disclosing the present invention, means an electrochemical cell that undergoes a redox reaction when electrical energy is applied.

The term "particle", as used in disclosing the present application, embraces different shapes and includes fibres, tubes, agglomerates, rounded entities etc.

The abbreviation PTFE, as used in the present application, stands for poly(tetrafluoroethylene), also known as poly(tetrafluorethene).

The term fully-submersible electrode, as used in disclosing the present invention, refers to electrodes with a solid-liquid interface, wherein the solid material is electrically conducting and may or may not contain a catalyst or biocatalyst for supporting an electrochemical reaction between the liquid and the electrochemically-active microbes present in the system. Such electrodes are preferably free of precious-metals.

The term electrochemically active biocatalyst as used in disclosing the present invention is a catalyst of biological origin, preferably enzymes and microbes and particularly preferably microbes, which is able to accept or donate electrons in an electrochemical process.

The term microbe as used in disclosing the present invention, means a micro-organism, which in turn means a microscopic organism including bacteria, fungi, protozoans, yeast, viruses and algae.

The term inorganic or organic chemical, as used in disclosing the present invention, means an inorganic or chemical compound.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

It is to be understood that although preferred embodiments, specific constructions and configurations, as well as materials, have been discussed herein for devices according to the present invention, various changes or modifications in form and detail may be made without departing from the scope and spirit of this invention. For example, any formulas given above are merely representative of procedures that may be used. Functionality may be added or deleted from the block diagrams and operations may be interchanged among functional blocks. Steps may be added or deleted to methods described within the scope of the present invention.

Process for manufacturing a gas diffusion electrode

According to a first aspect of the present invention a process for manufacturing a gas diffusion electrode comprising an electrochemically active layer (AL), a water-repellent layer (WLR) and an integrated current collector, said process comprising the steps of: (i) preparing said electrochemically active layer comprising an electrically conductive and a first binder; (ii) preparing a second layer comprising a pore-forming agent and particles of a hydrophobic material and/or a second binder on said electrochemically active layer to provide a laminate; (iii) assembling said electrochemically active layer, said second layer and said current collector such that said electrochemically active layer is sandwiched between said current collector and said second layer e.g. to realise a final laminate thickness of less than 1000 $\mu$m, with less than 800 $\mu$m being preferred and less than 600 $\mu$m being particularly preferred; and (iv) rendering said second layer water repellent by realising porosity therein, thereby providing the gas diffusion electrode. Gas diffuses through this WRL to the AL where the gas and the liquid electrolyte interact with one another.

According to a preferred embodiment of the first aspect of the present invention, said first binder is used as a powder or as a suspension.

According to a preferred embodiment of the first aspect of the present invention, the electrochemically active layer is prepared by mixing, agglomerating and calendaring an electrically conductive powder with a first binder powder.

According to a preferred embodiment of the first aspect of the present invention, step (i) comprises the sub-steps of: (I) mixing and agglomerating an electrically conductive powder with a first binder powder (e.g. PTFE) and/or a dispersion of particles of said first binder (e.g. PTFE) to provide a first mixture; (II) pressing the first mixture into a homogeneous cake; and (III) reducing the cake in thickness by at least two passes through a calendaring machine to produce the electrochemically active layer (e.g. with a thickness of less than 1000 $\mu$m with less than 800 $\mu$m being preferred and less than 600 $\mu$m thick being particularly preferred).

According to a preferred embodiment of the first aspect of the present invention, the second layer is prepared by mixing, agglomerating and calendaring a pore-forming agent and particles of a hydrophobic material; and calendaring the second layer onto the electrochemically active layer to provide a laminate, the laminate being preferably subjected to cold rolling under a predefined pressure (e.g. 150 bar) thereby realising porosity in the electrochemically active layer, the cold rolled laminate then being preferably laminated onto the current collector by cold rolling in such a way that the electrochemically active layer is sandwiched between said current collector (e.g. an electrically conductive gauze or web) and said water repellent layer e.g. to realise a final laminate thickness of less than 1000 $\mu$m, with less than 800 $\mu$m being preferred and less than 600 $\mu$m being particularly preferred.

According to a preferred embodiment of the first aspect of the present invention, step (ii) comprises the sub-steps of: (a) mixing a pore forming agent (e.g. ammonium bicarbonate) with particles of a hydrophobic material (e.g. PTFE) and/or powder of a second binder to form a second mixture; (b) pressing the second mixture into a homogeneous cake; and (c) reducing the cake in thickness by at least two passes through a calendaring machine to produce the second layer (preferably less than 600 $\mu$m thick) on the electrochemically active layer.

According to a preferred embodiment of the first aspect of the present invention, step (iii) comprises the sub-steps of (1) subjecting the electrochemically active layer produced in step (i) and the second layer produced in step (ii) to cold rolling thus providing a laminate; (2) laminating said cold-rolled laminate onto said current collector by cold rolling in such a way that the electrochemically active layer is sandwiched between said current collector (e.g. an electrically conductive gauze or web) and said water repellent layer e.g. to realise a final laminate thickness of less than 1000 $\mu$m, with less than 800 $\mu$m being preferred and less than 600 $\mu$m being particularly preferred.

According to a preferred embodiment of the first aspect of the present invention, the porosity in the second layer is realised by removal of the pore-forming agent.

According to a preferred embodiment of the first aspect of the present invention, porosity in said second layer is accomplished in step (iv) by e.g. thermolysis of a pore-forming agent at a temperature in the range of 40 to 100°C, preferably in the range 60°C to 85°C.

According to another preferred embodiment of the first aspect of the present invention, said first layer is subjected to agglomeration and calendaring thereby realising porosity in said first layer prior to calendaring said second layer.

According to another preferred embodiment of the first aspect of the present invention, said first layer and said second layer are subjected simultaneously to calendaring in a single pass thereby realising strong attachment in both said first layer and said second layer.

According to another preferred embodiment of the first aspect of the present invention, calendaring is realised by pressing a cake of the materials formed after agglomeration under two rolling metallic rollers.

According to a preferred embodiment of the first aspect of the present invention, in said step (i) an electrochemically active catalyst is additionally present in the mixing and agglomeration process, said catalyst is preferably a biocatalyst preferably comprising a microbe, the microbe being preferably selected from the group consisting of actinomycete bacteria and carboxidotrophic bacteria or a mixture thereof.

According to a preferred embodiment of the first aspect of the present invention, the gas diffusion electrode is produced according to a process comprising the steps of dissolving at least one polymer in at least one solvent to produce a polymer solution; mixing active powder and an electrochemically active catalyst e.g. a biocatalyst in said polymer solution to form a suspension; casting the suspension onto a supported current collector net to form a phase-invertible layer; immersing the phase-invertible layer in a non-solvent to extract said at least one solvent resulting in coagulation thereby producing a porous active layer (e.g. 80% by weight active powder, 20% by weight polymer and biocatalyst) ; boiling the active layer in demineralised water to remove the residual solvent and non-solvent; drying said boiled active layer at room temperature; adding hydrophobic polymer particles to a solution of at least one binder in at least one solvent to provide a hydrophobic polymer dispersion; and casting the hydrophobic polymer dispersion onto the active layer to form a hydrophobic gas diffusion layer. A typical hydrophobic gas diffusion layer is composed of 75 weight% polymer binder and 25 weight% of particles of a hydrophobic material.

Suitable electrically conductive particles are electrically conductive particles with a specific surface area in the range of 1 m$^2$/g to 1500 m$^2$/g for example metal particles and carbon particles, with highly electrically conductive carbon particles with a specific surface area of at least 100 m$^2$/g being preferred. Suitable highly electrically conductive carbon particles with high specific surface areas include graphite, carbon nanotubes, carbon black e.g. Norit SX-1G, Vulcan XC-72, Ketjenblack.

According to another preferred embodiment of the first aspect of the present invention said electrically conductive material is carbon or a metal.

According to another preferred embodiment of the first aspect of the present invention the weight ratio of electrically conductive particles to first binder in said suspension of particles of an electrically conductive material in a solution of a first binder is in the range of 60 to 95% by weight, with 70 to 80% by weight being preferred.

Agglomeration techniques in combination with the principle of calendaring make it possible to control the most important properties of a gas diffusion electrode e.g. thickness, porosity, pore distribution, structure (pore shape), mechanical characteristics, dimensions, in particular the hydrophilic channels to allow the electrolyte to diffuse through to the electrode and hydrophobic channels to allow the gas to diffuse to the electrode and to prevent leakage of electrolyte from the external surface of the gas diffusion electrode and overvoltage. This can be realised by the choice of polymer to bind the electrode together, the quantity and particle size of any pore-formers used, the volume ratio of polymer to electrode material, the pressure applied, the time of agglomeration, and the temperature at which the calendaring takes place. However, to be able to calendar a gas diffusion electrode the binder has to be mixed well. PTFE, the binder of choice in this case is able to function as a binder due to its ability to creep as a result of a transition temperature near room temperature and hence to be moulded together under cold rolling conditions which results in cold sintered PTFE which binds the multilayer gas diffusion electrodes together while providing hydrophobic channels for gas transport and preventing the surface leakage of hydrophilic electrolyte.

According to another preferred embodiment of the first aspect of the present invention, said water repellent layer is capable of preventing electrolyte leakage.

According to another preferred embodiment of the first aspect of the present invention, said second layer further comprises a hydrophobizing agent.

Suitable pore formation promoting materials include salts such as ammonium bicarbonate. The main advantage here of using such salts is that these salts after the sintering operation are leached out from the pores or which are burnt or gasified in the sintering operation. Generally they are used in amounts of about 60-85% by volume of the powdered mixture to be used for the final electrode body. The electrode bodies thus obtained have porosities from e.g. 60 up to about 85%. But this can be reduced to even 30% if necessary such as in cases of microbial fuel cells where there is a need to reduce evaporative losses of the electrolyte.

According to another preferred embodiment of the first aspect of the present invention, said suspension of particles of an electrically conductive material in a solution or powder of a first binder further comprises a catalyst. Suitable cathode catalyst materials include noble metals, e.g. platinum and silver, non-noble metals and organometallic derivatives thereof, manganese oxides, perovskites and spinels. Suitable anode catalyst materials include platinum, nickel, Raney nickel, ceria and materials having a surface composition comprising a composition $M_x/Pt_y/Sub$; wherein M is selected from the group of elements Fe, Co, Rh and Ir; or wherein M represents two different elements selected from the group comprising Fe, Co, Rh, Ir, Ni, Pd, Cu, Ag, Au and Sn; and wherein Sub represents a substrate material selected from Ru and Os; the respective components being present within specific ranges.

According to another preferred embodiment of the first aspect of the present invention, the electrochemically active layer is a carbon electrode

Current collector

According to another preferred embodiment of the first aspect of the present invention, the current collector is optimized using current and potential distribution modelling.

According to another preferred embodiment of the first aspect of the present invention, the current collector is selected from the group consisting of a metal type, a metal-plastic type, a mixed metal type, a mixed metal-plastic type, a mixed metal-metal type, a mixed metal-metal-plastic type a mixture of metal and other non-metallic conductive (such as conductive polymers and conductive carbon e.g. graphite, graphene and carbon nano-tubes), or non-conducting material (such as plastic), a porous electrically conductive web and any combination thereof.

According to another preferred embodiment of the first aspect of the present invention, the current collector is an array of multiple meshes in a conductive frame

According to another preferred embodiment of the first aspect of the present invention, the current collector can be only in one plane (flat) or in two planes (woven).

According to another preferred embodiment of the first aspect of the present invention, the current collector comprises metal wire in only one direction or is in two directions substantially perpendicular to one another.

According to another preferred embodiment of the first aspect of the present invention, the current collector comprises metal wire of the same thickness, of different thicknesses or of varying thickness.

According to a seventh aspect of the present invention a process for manufacturing a current collector for a gas diffusion electrode is realised, wherein the current collector is designed with defined geometries and calculated primary, secondary or tertiary current distributions e.g. using computational models such as those provided by but not limited to COMSOL Multiphysics model. Most of the time, experimental studies are useful but not satisfactory for explaining all the pertinent system parameters; the reason for this is that they focus on either microbiological or engineering aspects separately.

Porous electrically conductive web

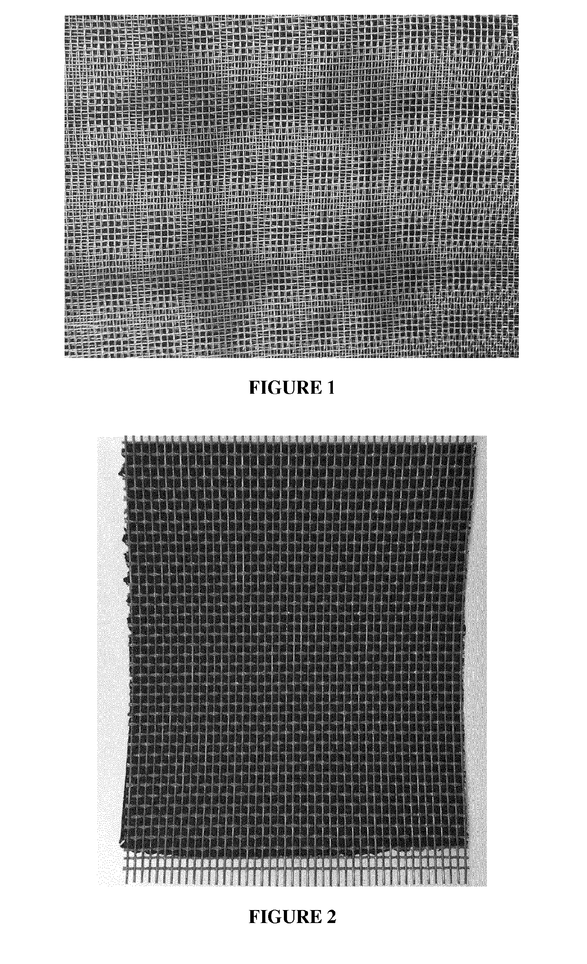

According to another preferred embodiment of the first aspect of the present invention, the current collector further comprises a porous electrically conductive web, preferably a carbon electrode e.g. a pitch-bonded carbon electrode or a carbon foam, a metal-cast electrode or a metallic electrode e.g. a punched metal sheet, a woven metallic material, a metallic mesh, a metallic screen, a metal gauze, a metallic foam or an electrically conducting net or array (Figure 1 and 2). The selection of material for the porous electrically conductive web is dependent upon the requirements of the application. Suitable materials include stainless steel and nickel. The pore size in the porous electrically conductive web is preferably in the range of 149 $\mu$m to 840 $\mu$m.

According to another preferred embodiment of the first aspect of the present invention, the current collector further comprises a chemically or thermally treated porous electrically conductive web e.g. to avoid corrosion in strongly acidic electrolytes.

According to another preferred embodiment of the first aspect of the present invention, the current collector further comprises a porous electrically conductive web in direct contact with the current collector, which is an electrically conductive material with even higher electric conductivity that will take away or bring the electron from and to the porous electrically conductive web.

Hydrophobic particles

Suitable hydrophobic particles include fluorinated polymers such as PTFE and minerals such as talc. PTFE particles less than 1000 $\mu$m in diameter have been found to be particularly useful.

According to another preferred embodiment of the first aspect of the present invention, the weight ratio of hydrophobic particle to second binder in said second layer is in the range of 1.25 : 20, with 2.5 to 6 : 20 being preferred.

According to another preferred embodiment of the first aspect of the present invention, the concentration of hydrophobic particles in the second layer is in the range of 5 to 80% by weight, with 50 to 75% by weight being preferred.

According to another preferred embodiment of the first aspect of the present invention, the particle size of the hydrophobic particles is in the range of 0.2 to 470 $\mu$m, with 20 to 300 $\mu$m being preferred.

According to another preferred embodiment of the first aspect of the present invention, the number averaged particle size of the hydrophobic particles is in the range 50 to 260 $\mu$m, with 70 to 160 $\mu$m being preferred.

According to another preferred embodiment of the first aspect of the present invention, said hydrophobic material is a fluorinated polymer, with poly(tetrafluroethylene) (PTFE) or perfluorinated ethylene-propylene copolymer (FEP) being preferred or a mineral, such as talc, said mineral being preferably non-conductive.

Binders

Suitable polymers for use as first and second binders include polysulphone (PSU), polyethersulphone (PES), polyphenylenesulfide (PPS), polyvinyl chloride (PVC), chlorinated polyvinyl chloride (C-PVC), polyvinylidene fluoride (PVDF), poly(acrylonitrile) (PAN), polyethyleneoxide (PEO), polymethylmethacrylate or copolymers thereof, sulfonated polymers such as perfluorosulfonic acid (Nafion). Nafion, PVDF, VDF-copolymers and organic polymer compounds composed primarily of PVDF are particularly preferred from the standpoint of oxidation/reduction-resistance and film-forming properties. Among these, terpolymers of vinylidene fluoride (VDF), hexafluoropropylene (HFP) and chlorotrifluoroethylene (CTFE) are preferred for their excellent swelling property, heat resistance and adhesion to electrodes.

According to a preferred embodiment of the first aspect of the present invention said first and second binder is the same binder.

According to a further preferred embodiment of the first aspect of the present invention at least one of said first and second binder is PTFE.

Process for manufacturing a water repellent layer of a gas diffusion electrode

According to a sixth aspect of the present invention a process for manufacturing a water repellent layer of a gas diffusion electrode is realised, the process comprising the steps of : (a) mixing a pore forming agent (e.g. ammonium bicarbonate) with particles of a hydrophobic material (e.g. PTFE) and/or second binder to form a second mixture; (b) pressing the second mixture into a homogeneous cake; and (c) reducing the cake in thickness by at least two passes through a calendaring machine to produce the second layer (e.g. with a thickness of less than 1000 $\mu$m, with less than 800 $\mu$m being preferred and less than 600 $\mu$m being particularly preferred) on the electrochemically active layer.

According to a preferred embodiment of the sixth aspect according to the present invention, the water repellent (hydrophobic gas diffusion) layer of the gas diffusion electrode is obtained by a process comprising phase inversion of a layer comprising a second binder and hydrophobic particles, said phase inversion being preferably realised by immersion in at least one solvent for the second binder and optionally further comprises at least one solvent for said second binder.

According to another preferred embodiment of the sixth aspect according to the present invention, the layer further comprises at least one solvent for said second binder and optionally at least one non-solvent for said second binder.

Gas diffusion electrode

According to a second aspect of the present invention a gas diffusion electrode is realised obtainable by the first aspect of the present invention.

Although many of the components used in the gas diffusion electrodes of the present invention are also present in gas diffusion electrodes produced by conventional manufacturing methods, the gas diffusion electrodes of the present invention differ in at least one fundamental respect namely that in the gas diffusion electrodes of the present invention, although metals are used as current collectors, their shape, geometry, design and attachment to the combination of active layer (AL) and water repellent layer (WRL) is completely different and is based on the results obtained from the computational model. This means that not only the mechanical strength of the newly developed electrode better for certain applications but also the current distribution profile through the multilayer gas diffusion electrode according to the present invention is much better than the conventional gas diffusion electrode.

According to a preferred embodiment of the second aspect of the present invention, said water repellent layer (WRL) is capable of preventing electrolyte leakage.

Membrane electrode assembly

According to a third aspect of the present invention a membrane assembly is realised, the membrane assembly comprising at least one gas diffusion electrode according to the second aspect of the present invention.

For a membrane electrode assembly to operate efficiently contact must be provided simultaneously with the three phases present: gas, liquid (electrolyte) and solid electrode.

According to a preferred embodiment of fourth aspect of the present invention said membrane electrode assembly is a fuel cell. In electrochemical cogeneration fuel cell systems specific chemicals are produced in addition to electrical energy via the operation of a fuel cell in which porous gas diffusion electrodes are essential.

According to a further preferred embodiment of third aspect of the present invention said membrane electrode assembly is a battery.

According to another preferred embodiment of the third aspect of the present invention said membrane electrode assembly is a biological fuel cell, with a microbial or enzymatic fuel cell being preferred.

According to another preferred embodiment of the third aspect of the present invention, said membrane electrode assembly is an alkaline fuel cell, with a metal-air alkaline fuel cell, e.g. a zinc-air alkaline fuel cell, being a preferred alkaline fuel cell.

According to another preferred embodiment of the third aspect of the present invention, said membrane electrode assembly is a fuel cell with liquid acid electrolyte.

According to another preferred embodiment of the third aspect of the present invention, said membrane electrode assembly is a fuel cell for the cogeneration of chemicals and electrical power, such as (but not limited to) a $H_2$-NO fuel cell for the electrochemical synthesis of hydroxylamine.

According to another preferred embodiment of the third aspect of the present invention, said membrane electrode assembly is a microbial or enzymatic biofuel cell as described in R.A. Bullen et al. in Biosensors and Bioelectronics, volume 21, pages 2015-2045 (2006) in which biofuel cells and their development are reviewed with much of the work in the previous decade being focused on the development of the chemistries of the electrode-enzyme-substrate interactions, which has resulted in the identification of more robust and active microbes and enzymes, the development of mediators with potentials very close to those of the enzyme active site systems and improved mediator arrangements. A mediator-less microbial fuel cell does not require a mediator but uses electrochemically active bacteria to transfer electrons to the electrode (electrons are carried directly from the bacterial respiratory enzyme to the electrode). Among the electrochemically active bacteria are *Shewanella putrefaciens* and *Aeromonas hydrophila.* Some bacteria, which have pili on their external membrane, are able to transfer their electron production via these pili. Bacteria in mediator-less MFCs such as *Geobacter sulfurreducens* typically have electrochemically-active redox enzymes such as cytochromes on their outer membrane that can transfer electrons to external materials.

In microbial fuel cells waste water is purified and at the porous gas diffusion electrodes particular components are converted, whereby energy is produced at the same time e.g. oxygen from the air is reduced.

The chlor-alkali industry is considering the use of air-cathodes instead of the present hydrogen cathodes. The use of air-cathodes results in a significant decrease in the cell voltage (reduction in electricity consumption): the theoretical cell voltage should be reduced from 2.19 V to 0.96 V. In practice 500 kWh per ton chlorine can be saved.

According to a preferred embodiment of the third aspect of the present invention said membrane electrode assembly is a capacitive deionization system, or other desalination systems.

According to another preferred embodiment of the third aspect of the present invention, said membrane electrode assembly is a bioelectrochemical system, with a microbial fuel cell, enzymatic fuel cell and microbial electrolysis cell being preferred bioelectrochemical systems.

According to another preferred embodiment of the third aspect of the present invention said gas-diffusion electrodes and/or membrane electrode assembly is a component of a technology realizing redox reactions involving liquid and gas streams, being the gas diffusion electrode the three phase contact point for achieving an electrochemical transformation or separation.

According to another preferred embodiment of the third aspect of the present invention said membrane electrode assembly is an electrochemical system (biotic or abiotic) performing the tasks of pH adjustment, transport (e.g. migration), separation or recovery of an compound (ionic or non-ionic), conversion of a reagent (ionic or non-ionic) into product (ionic or non-ionic), or energy (e.g. electricity) generation out of a redox conversion or a gradient in potential between the said electrodes, independently or simultaneously.

Modelling, and more particularly multi-physics modelling, can be considered as an appropriate method in order to gather information from several disciplines for increasing the overall system performance of electrochemical cells through a multidisciplinary approach.

A defined geometry is constructed according either to an existing prototype of single-cell electrochemical device or to a newly created design. Stack-cell models can be arranged using this approach, as well taking into account other already-existing geometrical designs. Different cell-component configurations can be proposed by a person skilled the art. Such models can include electrolyte and electrode domains (anode, cathode) as well as membranes, separators, gas diffusion layers, current collectors and the rest of the components that make an electrochemical and/or bioelectrochemical device fully functional. The critical aspect in the initial phase is the choice of a desired geometrical arrangement. The choice of materials and the properties thereof can be as broad as those available in the market or newly synthesised. According to the software capabilities, the design is defined as a set of components of an electrochemical cell operating in either galvanic or electrolytic mode; the appropriate equations associated to such components are integrated and solved to predict the model output for the distribution of the electrochemical properties of the interface such as a current density or the potential distribution at the electrode/electrolyte interface or other parameters as anticipated in the model equations.

After the modelling process, the current and potential distributions are obtained and can be compared for different geometries proposed, guiding in this way the path for new improvements. Afterwards, the different components are manufactured for the production of improved gas diffusion electrodes.

Bio-electrochemical reactor

According to another preferred embodiment of the third aspect of the present invention said membrane electrode assembly is a bio-electrochemical reactor, which preferably comprises an anode and a cathode, said anode and cathode being electrically connected to one another and in use ionically connected to one another via a liquid electrolyte through independent or shared compartments, wherein in use at least one of said anode and said cathode acts as a gas diffusion electrode according to the second aspect of the present invention.

According to another preferred embodiment of the third aspect of the present invention said membrane electrode assembly is a bio-electrochemical reactor, in which an electrochemically active biocatalyst is present in the electrochemically active layer of the gas diffusion electrode, said electrochemically active biocatalyst preferably comprising a microbe, the microbe being preferably selected from the group consisting of actinomycete bacteria and carboxidotrophic bacteria or a mixture thereof.

According to another preferred embodiment of the third aspect of the present invention said membrane electrode assembly is a bio-electrochemical reactor, wherein said bio-electrochemical reactor comprises an anode and a cathode of carbon-based materials, more preferably precious-metal free materials, which are separated by an ionically-conducting separator, said ionically-conducting separator preferably being a membrane, an ion-exchanging material or porous material allowing ionic mobility.

According to another preferred embodiment of the third aspect of the present invention said membrane electrode assembly is a bio-electrochemical reactor, said bio-electrochemical reactor comprises an anode and a cathode connected by an external circuit made by a low-impedance (provide value ranges) electrical conductor, preferably a metallic material e.g. stainless steel and copper or a metal oxide, or an organic material e.g. polymeric structure.

According to another preferred embodiment of the third aspect of the present invention said membrane electrode assembly is a bio-electrochemical reactor, said bio-electrochemical reactor comprises a power supply in the electrical circuit, such as but not limited to, a DC source for impressing current, such as a battery, solar cell, or sacrificial electrodes connected to the system in a way that provide the necessary 'driving force' to the system for it to operate, in the absence of which it operates as a microbial fuel cell providing enough energy to operate the system.

According to another preferred embodiment of the third aspect of the present invention said membrane electrode assembly is a bio-electrochemical reactor, said bio-electrochemical reactor comprising an anode and a cathode connected by a low-impedance current collector, preferably a metallic collector e.g. stainless steel and copper or a metal oxide collector e.g. titanium oxide.

According to another preferred embodiment of the third aspect of the present invention said membrane electrode assembly is a bio-electrochemical reactor, said bio-electrochemical reactor comprising an anode and a cathode, a biocatalyst being present as a film adhering to the cathode and/or anode.

Method of producing a membrane electrode assembly

According to a fourth aspect of the present invention a method of manufacturing a membrane electrode assembly comprising a membrane sandwiched between two electrodes (or embedded in an electrolyte located at one end of the electrode) at least one of which is a gas diffusion electrode is realised, wherein said method comprises the step of casting said membrane electrode assembly in two steps, said method preferably comprising at least one phase inversion step.

Furthermore, not only is it possible to cast a gas diffusion electrode, e.g. onto a calendared electrode, but it is also possible to cast a single cell unit (MEA: membrane Electrode Assembly) in which both membrane and electrode are manufactured by casting. The anode, cathode and membrane can be cast in a two stages to provide a unit cell. This in addition to being enormously cost saving has the advantage of an improved interface between the electrodes and the membrane. If the separate components (electrodes and membrane) do not have an efficient contact at the interface between two of said components mass transport problems can arise at the interfaces between these different components. In addition to the advantage of optimal quality of the interface between the castings, there is the additional advantage of realising an ideal adhesion between the electrodes and the membrane.

Use of the gas diffusion electrode

According to a fifth aspect according to the present invention the use of the above-mentioned gas diffusion electrode in a membrane electrode assembly is realised.

The gas diffusion electrode, according to the present invention, can be used in fuel cells such as the alkaline hydrogen-air fuel cell; the alkaline zinc-air fuel cell; electrochemical cells for cogeneration of chemicals and electrical power; biological fuel cells, such as microbial fuel cells; chlor-alkali cells, batteries and water electrolysis. It can also be used in the types of devices described in the definition for membrane-electrode assembly and bioelectrochemical reactor.

**EXAMPLES**

**EXAMPLE 1:**

This example is presented with the purpose of illustrating the COMSOL-guided modeling process, used to evaluate novel geometries of current collectors to be further built and utilized in a broad variety of electrochemical systems, including bioelectrochemical systems.

The current distribution profiles over the electrodes are investigated in order to compare the different efficiencies of the system in the form of a full-electrochemical cell. Several targets are expected in order to meet a suitable current collector material, being at least: (i) cost-effective are considered; (ii) geometries machinable with relative ease; (iii) high current densities at the electrode-electrolyte interface; (iv) current density distribution tending towards homogeneity; (iv) high exchange current density to promote fast kinetic rates. The general COMSOL modeling procedure is applied, following the steps of: (A) selection of space dimension (0D, 1D, 2D, 3D) and type of physics to be modeled (primary, secondary or tertiary current distribution), (B) definition of the parameters to be later on used in the model (e.g. scalar numbers that can be used for specifying geometric dimensions, mesh sizes, physical quantities attributable to the physical model, etc.); (C) definition of the desired geometrical entities; (D) definition of the physics, meaning the application of the mathematical/computational tools that describe the electrochemical reactions, phenomena and processes to me modeled, together with the definition of the properties of the materials, boundary and interface conditions, equations and initial conditions; (D) discretization of the model geometry into small units of simple geometrical shapes, referred to as mesh elements; (E) run of the model by using the previously created meshes and specified equations and parameters; (F) after completion of the simulation, a final image is obtained, which represents a solution of the model configured.

It must be noted that in this process, a wide set of variations on the different parameters characterizing the model can be utilized, but at the end all depend on the physical, chemical and biological characteristics associated to the desired electrochemical conversions. For example, different types of kinetic behaviors can be associated to the catalytic activity of the electrode material, as well as the parameters that describe them (e.g. exchange current density, symmetry factors of the electrochemical reactions, porosity of the electrode material, electric conductivity of the metallic material used as current collector, conductivity of the electrolyte, etc.). All these parameters are not randomly decided, but are a result of the knowledge acquired for a particular electrochemical system or application. Therefore, experimentally measured parameters can also be incorporated into the model.

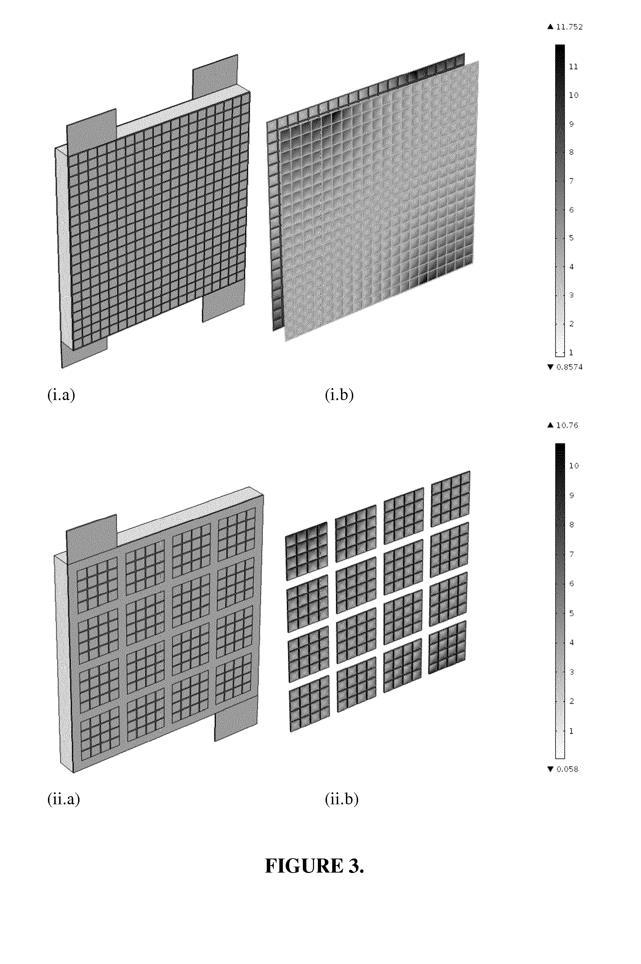

In the Figure 3 below, a half-electrochemical-cell is considered for an anodic or cathodic reaction in which acetate oxidation due to microbial-electrochemical activity or oxygen reduction can occur, respectively. A total current of 100 mA is applied through the lug in the current collector in which the porous electrode material is held; both or one of the current collector and porous electrode material can be directly exposed to the electrolyte by means of a porous membrane (both not limited to it) and on the opposite side such materials can be exposed to a gas diffusion layer so that a three-phase contact is achieved to carry out an electrochemical conversion at the porous electrode material where the gas (or air), substrate in the electrolyte and catalytic material come into contact, regardless of the specific reaction taking place.

Figure 3 shows schematic representations of two electrodes (i.a and ii.a) containing different geometrical arrays for current collectors (B): a square single mesh with square holes square in shape and an array of multiple square meshes of the same size with the same size of square holes in a conductive frame respectively. An array of porous electrode material (C) is in direct contact with such current collector. The current collector is electrically connected by a lug (A) made of the same or different material and shape as the current collector. The electrode is exposed to an electrolyte (D). The gas-diffusion layer, can be placed on the front or back face of the electrode and a porous material or membrane arranged on the electrolyte side of the electrode. At the right of each electrode representation, the current density (A/m$^2$) obtained with the model is displayed (i.b and ii.b respectively). The geometry in (ii.a) clearly gives an improved distribution of the current density at the level of the porous electrode material than that in (i.a), the gradient bar provided at the right of each electrode showing the scale of the results obtained. When the first electrode geometry (i.a) is used, the average current density obtained at the center of the electrode is of the order of 3-4 A/m$^2$, and a very evident darkening effect occurs towards the extremes where the lugs are placed. Conversely, in the second geometry (ii.a) the average current density obtained at the center of the electrode in a single unit filled in with porous material (C) intercalated in the current collector spaces is of the order of 4-5 A/m$^2$, and inside the same single unit of porous electrode intercalated a higher current density (6-7 A/m$^2$) is obtained towards approaching the current collector structure; a mild darkening effect occurs towards the extremes where the lugs are placed, reaching current densities in the same order of magnitude than with the first electrode geometrical array (i.a). Hence, the maximal current density obtained at both electrodes using the different current collector geometries are equivalent, but in the second array a better use of the overall electrode surface is achieved and therefore translated in a more homogeneous distribution of the current density profile. The construction of an array considering thicker and thinner wires in the current collector structure is the feature that was exploited in this geometry, although other arrays have also proven to be successful; for instance, providing preferential vertical paths for the current collector structure.

It can be appreciated by a person skilled in the art that the present invention may be susceptible to variations and modifications other than those specifically described. For example, the use of woven versus soldered wires, or layer by layer manufactured structures. Providing a full-cell array can also be anticipated (comparing a geometrical array for an anode, equal or different than the cathode), as well as multiple connected cells in series or parallel. The use of microbial consortia, enzymes, biological nanowires, or other biological components contained in the porous electrode material or current collector material also fall within the scope of this patent.

Example 2:

The electrode was composed of a current collector made of double layer stainless steel mesh joined together by soldering, an AL containing 80% by weight of carbon and 20% by weight of PTFE and a WRL consisting of 70% by weight of PTFE and 30% by weight of ammonium bicarbonate. This electrode was designated as MMBSSol. The other electrodes tested were also with newly designed and fabricated current collectors such as 1) Metal and plastic combined together (designated as MFBB woven), 2) Big metal mesh and small metal mesh sintered together, 3) big metal mesh on small metal mesh printed. All the above electrodes with novel current collectors were compared to an electrode with the standard current collector.

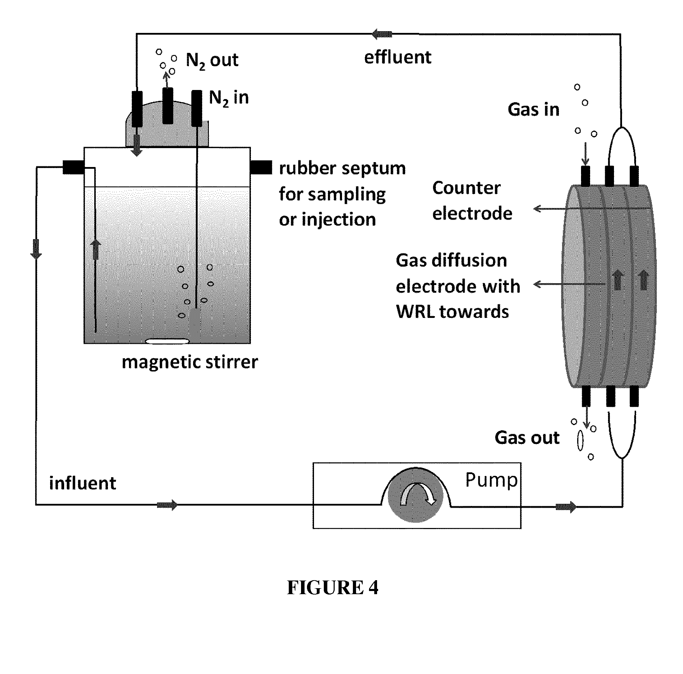

Operational tests were carried out with the cathodic half-cell as shown in Figure 4, such as flow rate of the pump, flow direction for the phosphate buffer solution (PBS), a balanced salt solution used for a variety of cell culture applications for gas flows such as nitrogen and air.

The electrode was used and tested as an oxygen reduction electrode in a cathode half-cell configuration. For measurement of an E-j polarization curve the electrode potential varied with a speed of 0.1 mV per second. At a potential of - 100 mV vs. the Ag/AgCl reference electrode a current density of 0.2 mA per cm$^2$ was measured at room temperature under air flow with only phosphate buffer solution (PBS) as electrolyte. This is a relatively high current density in view of the electrode being in a poorly conducting electrolyte and one, moreover, in which there is no platinum group metal (PGM) catalyst. The E-j polarization curve with current as a function of potential is shown in Figure 5.

It is clearly evident from Figure 5 that compared to the electrode with standard current collector, all three electrodes with mixed metal-metal type current collectors performed substantially better in terms of oxygen reduction at the same potentials. Only in the electrode with mixed metal plastic type current collector, was the reduction current somewhat lower than that of the standard current collector. However, it was still enough for the purpose of biofuel cells. Moreover, the cost of electrodes with mixed metal and plastic type current collector is considerably lower than that of electrodes with standard current collectors. For electrochemical cells/applications in which a catalyst is used and hence the electrolyte is strongly conducting, much higher current densities are to be expected for a particular potential/overvoltage.

The performance was quite stable and neither electrode leakage nor weeping through the electrode was observed over the whole test period.

**Claims**

1. A process for manufacturing a gas diffusion electrode comprising an electrochemically active layer, a water-repellent layer and an integrated current collector, said process comprising the steps of: (i) preparing said electrochemically active layer comprising an electrically conductive powder and a first binder; (ii) preparing a second layer comprising a pore-forming agent and particles of a hydrophobic material and/or a second binder on said electrochemically active layer to provide a laminate; (iii) assembling said electrochemically active layer, said second layer and said current collector such that said electrochemically active layer is sandwiched between said current collector and said second layer; and (iv) rendering said second layer water repellent by realising porosity therein, thereby providing said gas diffusion electrode.

2. The process according to claim 1, wherein step (i) comprises the sub-steps of: (I) mixing and agglomerating an electrically conductive powder with a first binder powder to provide a first mixture; (II) pressing the first mixture into a homogeneous cake; and (III) reducing the cake in thickness by at least two passes through a calendaring machine to produce the electrochemically active layer.

3. The process according to claim 1 or 2, wherein step (ii) comprises the sub-steps of: (a) mixing a pore forming agent with a suspension of particles of a hydrophobic material in a solution and/or powder of a second binder to form a second mixture; (b) pressing the second mixture into a homogeneous cake; and (c) reducing the cake in thickness by at least two passes through a calendaring machine to produce the second layer on the electrochemically active layer.

4. The process according to any one of the preceding claims, wherein said current collector is optimized using current and potential distribution modelling.

5. The process according to any one of the preceding claims, wherein said current collector is selected from the group consisting of a metal type, a metal-plastic type, a mixed metal type, a mixed metal-plastic type, a mixed metal-metal type, a mixed metal-metal-plastic type a mixture of metal and other non-metallic conductive or non-conducting material, a porous electrically conductive web and any combination thereof.

6. The process according to any one of the preceding claims, wherein said current collector is an array of multiple meshes in a conductive frame

7. The process according to any one of the preceding claims, wherein said gas diffusion electrode further comprises a porous electrically conductive web.

8. The process according to claim 7, wherein said porous electrically conductive web is in direct contact with said current collector.

9. A gas diffusion electrode obtainable by the process for manufacturing a gas diffusion electrode according to any one of the preceding claims.

10. A membrane assembly comprising at least one gas diffusion electrode according to claim 9.

11. The membrane assembly according to claim 10, wherein said membrane assembly is a bio-electrochemical reactor.

12. The membrane assembly according to claim 10, wherein said membrane assembly is a fuel cell.

13. A method of manufacturing a membrane electrode assembly comprising a membrane sandwiched between two electrodes at least one of which is a gas diffusion electrode, wherein said method comprises: the step of casting said membrane electrode assembly in two steps.

14. The method according to claim 13, wherein at least one of said two steps is a phase inversion step.

15. The use of a gas diffusion electrode according to claim 9 in any cell operating in galvanic or electrolytic mode.

16. A process for manufacturing a water repellent layer of a gas diffusion electrode, said process comprising the steps of: (a) mixing a pore forming agent with particles of a hydrophobic material and/or a second binder to form a second mixture; (b) pressing the second mixture into a homogeneous cake; and (c) reducing the cake in thickness by at least two passes through a calendaring machine to produce the second layer on the electrochemically active layer.

17. The process for manufacturing a water repellent layer of a gas diffusion electrode according to claim 16, wherein said pore forming agent is ammonium bicarbonate.

**FIGURE 1**

**FIGURE 2**

(i.a)　　　　　　　　　　　　　(i.b)

(ii.a)　　　　　　　　　　　　　(ii.b)

**FIGURE 3.**

**FIGURE 4**

**FIGURE 5**.

Europäisches
Patentamt

European
Patent Office

Office européen
des brevets

## EUROPEAN SEARCH REPORT

Application Number

EP 13 15 6781

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/027664 A1 (BURCHARDT TRYGVE [CH] ET AL) 3 February 2011 (2011-02-03) * page 3, paragraphs 34,35,38 - page 4, paragraphs 45,48 * * page 10, paragraph 105 * ----- | 1-17 | INV. H01M4/86 H01M4/88 H01M8/02 |
| X | US 3 594 236 A (BODEN DAVID P ET AL) 20 July 1971 (1971-07-20) * column 1, lines 63-72 - column 3, lines 19-22 * ----- | 1-12, 15-17 | |
| X | US 4 602 426 A (KAMPE DENNIS J [US] ET AL) 29 July 1986 (1986-07-29) * column 2, lines 15-40 * ----- | 1-12, 15-17 | |

| | |
|---|---|
| | TECHNICAL FIELDS SEARCHED (IPC) |
| | H01M |

The present search report has been drawn up for all claims

| Place of search | Date of completion of the search | Examiner |
|---|---|---|
| Munich | 17 July 2013 | Boussard, Nadège |

**ANNEX TO THE EUROPEAN SEARCH REPORT
ON EUROPEAN PATENT APPLICATION NO.**                          EP 13 15 6781

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2013

| Patent document cited in search report | | Publication date | Patent family member(s) | | Publication date |
|---|---|---|---|---|---|
| US 2011027664 | A1 | 03-02-2011 | EP | 2460211 A1 | 06-06-2012 |
| | | | EP | 2460221 A1 | 06-06-2012 |
| | | | EP | 2483946 A1 | 08-08-2012 |
| | | | US | 2011027664 A1 | 03-02-2011 |
| | | | US | 2011027665 A1 | 03-02-2011 |
| | | | US | 2011027666 A1 | 03-02-2011 |
| | | | WO | 2011013004 A1 | 03-02-2011 |
| | | | WO | 2011013005 A1 | 03-02-2011 |
| | | | WO | 2011014818 A1 | 03-02-2011 |
| US 3594236 | A | 20-07-1971 | NONE | | |
| US 4602426 | A | 29-07-1986 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CA 1264724
- US 4362790 A
- EP 200245 A
- US 4383010 A
- US 4680100 A
- US 6521381 B
- WO 2005096419 A1
- JP 2000133327 A
- WO 2007073598 A1
- FR 2843490 A1
- FR 2936105 A1
- FR 2936105 A

- US 20090305084 A
- WO 2010044983 A2
- WO 2005005981 A2
- WO 2010072982 A1
- US 20110318610 A1
- WO 20100042986 A1
- WO 2010042986 A1
- WO 2010068994 A1
- WO 2010068979 A1
- US 7000297 B
- EP 1690966 A1

### Non-patent literature cited in the description

- **UTLEY J.** *Chemical Society Reviews,* 1997, vol. 26, 157-167
- **M. CIFRAIN et al.** *Journal of Power Sources,* 2004, vol. 127, 234-242
- **F. BIDAULT et al.** *Journal of Power Sources,* 2009, vol. 187, 39-48
- **V. NEBURCHILOV et al.** *Journal of Power Sources,* 2010, vol. 195, 1271-1291
- **CHENG et al.** *Electrochemistry Communications,* 2006, vol. 8, 489-494
- **LOGAN et al.** *Microbial Fuel Cells: Methodology and Technology. Environmental Science & Technology,* 2006, vol. 40, 5181-5192
- **ROZENDAL et al.** *International Journal of Hydrogen Energy,* 2006, vol. 31, 1632-1640
- **ROZENDAL R.A. ; LEONE E. ; KELLER J. ; RABAEY K.** Efficient hydrogen peroxide generation from organic matter in a bioelectrochemical system. *Electrochemistry Communications,* vol. 11, 1752-1755
- **D. PANT.** *Renewable and Sustainable Energy Reviews,* 2011, vol. 15, 1305-1313
- **FOLLER ; BOMBARD.** *J. Appl. Electrochem.,* 1995, vol. 25, 613-627
- **YAMANAKA.** *Angew. Chem. Int. Ed.,* 2003, vol. 42, 3653-3655
- **RABAEY K. ; GIRGUIS P. ; NIELSEN L.K.** *Current Opinion in Biotechnology,* 2011, vol. 22, 1-7
- **NEVIN K.P. et al.** *mBio,* 2010, vol. 1 (2), 1-4
- **RABAEY K. ; ROZENDAL R.A.** *Nature Reviews Microbiology,* 2010, vol. 8, 706-716
- **K. RABAEY et al.** *Nat. Rev. Micro,* 2010, vol. 8 (10), 706-716

- *Bioresour. Technol,* 2010, vol. 101, 3085-3090
- **RABAEY et al.** *ISME J.,* 2008, vol. 2, 1387-1396
- **CLAUWAERT et al.** *Environ. Sci. Technol.,* 2007, vol. 41, 7564-7569
- **AULENTA et al.** *Environ. Sci. Technol.,* 2007, vol. 41, 2554-2559
- **ROZENDAL et al.** *Environ. Sci. Technol.,* 2008, vol. 42, 629-634
- **CLAUWAERT et al.** *Water Sci. Technol.,* 2008, vol. 57, 575-579
- **RABAEY et al.** Bioelectrochemical Systems: From Extracellular Electron Transfer to Biotechnological Application. IWA Publishing, 2009
- **SLEUTELS et al.** Bioelectrochemical systems: an outlook for practical applications. *Chem. Sus. Chem.,* 2012
- **WEI et al.** *Bioresource Technology,* 2011, vol. 102, 9335-9344
- **DENG et al.** *Appl. Microbiol. Biotechnol.,* 2010, vol. 87, 1675-1687
- **ZHANG et al.** *Electrochem. Commun.,* 2009, vol. 11, 2177-2179
- **ROZENDAL et al.** *Trends Biotechnol.,* 2008, vol. 26, 450-459
- **ZHANG et al.** *Environmental Science & Technology,* 2010, vol. 44, 1490-1495
- **ZHANG et al.** *Journal of Power Sources,* 2011, vol. 196, 1097-1102
- **R.A. BULLEN et al.** *Biosensors and Bioelectronics,* 2006, vol. 21, 2015-2045